# EUROPÄISCHE PATENTSCHRIFT

(11) **EP 0 893 770 B1**
(45) Veröffentlichungstag und Bekanntmachung des Hinweises auf die Patenterteilung: **10.09.2008**
(21) Anmeldenummer: 98113224.4
(22) Anmeldetag: 16.07.1998
(51) Int. Cl.: G06F 15/173

(54) **Verfahren zur schnellen Kommunikation in einem parallelen Computersystem und mit diesem Verfahren betriebenes paralleles Computersystem**
Method for communicating fast in a parallel computer system and a computer system functioning with this method
Méthode permettant une communication rapide dans un système d'ordinateur parallèle et un système d'ordinateur fonctionnant avec cette méthode

(30) Priorität: 21.07.1997 US 53207
(43) Veröffentlichungstag der Anmeldung: 27.01.1999
(73) Patentinhaber: Gunzinger, Anton, CH-8008 Zürich (CH)
(72) Erfinder: Gunzinger, Anton, CH-8008 Zürich (CH)
(74) Vertreter: Frei, Alexandra Sarah

(56) Entgegenhaltungen:
- WO-A-91/10200
- WO-A-95/16239
- US-A- 5 117 350
- S. F. LUNDSTROM: "Applications considerations in the system design of highly concurrent multiprocessors" IEEE TRANSACTIONS ON COMPUTERS., Bd. C-36, Nr. 11, November 1987, Seiten 1292-1309, XP000648615 NEW YORK US

## Beschreibung

### 1. Erfindungsgebiet

Die vorliegende Erfindung bezieht sich auf ein Verfahren zum Betreiben eines parallelen Computersystems und ein mit diesem Verfahren betriebenes paralleles Computersystem, gemäss den Oberbegriffen der unabhängigen Patentansprüche.

### 2. Stand der Technik

Durch neue Computeranwendungen wie z. B. Datenbanken, "Video on Demand", Audio und Internetserver steigt der Bedarf nach Rechenleistung und wird auch in den nächsten Jahren dramatisch steigen. Diese Rechenleistung kann kostengünstig nur durch den Einsatz von parallelgeschalteten Computersystemen erbracht werden.

Nach Gordon Bell lassen sich parallelgeschaltete Computersysteme in vier Klassen einteilen:
1. Multiprozessoren mit Nachrichtenaustausch
2. Multiprozessoren mit gemeinsamem Speicher
3. Multicomputer mit Nachrichtenaustausch
4. Multicomputer mit gemeinsamem Speicher.

Bei den Multiprozessoren verfügen die einzelnen Prozessorelemente über ein eigenes Rechenwerk (arithmetic-logic unit, ALU), eigene Programmsteuerung und eigenen Speicher. Der einzelne Prozessor ist beim Starten des Systems nicht lauffähig; das Programm und die Daten werden zuerst von einer zentralen Stelle herunterladen.

Multicomputer bestehen aus vollständigen Computersystemen, mit Rechenwerk (ALU), Programmsteuerung, eigenem Speicher und eigenem Startprogramm. Für die Kommunikation ist eine entsprechende Kommunikationssteuereinheit vorhanden.

Die Kommunikation kann entweder durch einen gemeinsamen Speicher oder durch den Austausch von Nachrichten erfolgen.

Bei Systemen mit gemeinsamen Speichern kann der Speicherzugriff zum Flaschenhals werden; solche Systeme sind deshalb nicht einfach skalierbar. Sie sind jedoch einfach programmierbar und besitzen meistens eine tiefe Latenzzeit. Digital Equipment, Silicon Graphics und andere Hersteller bieten solche Systeme auf dem Markt an. Die maximale sinnvolle Grösse von solchen Systemen liegt bei ungefähr 32 Prozessoren.

Systeme mit Nachrichtenaustausch sind besser skalierbar; es wurden Systeme mit bis zu 10'000 Prozessoren gebaut. Sie sind aber in der Regel kompliziert zu programmieren, und tiefe Latenzzeiten sind nur mit speziellen Betriebssystemen zu erreichen. Unter Latenzzeit wird in dieser Schrift die Zeit verstanden, die vom Anruf der Kommunikationsfunktion auf einem Senderprozessor bis zur Ankunft auf einem Empfängerprozessor vergeht.

Parallele Computersysteme sind bspw. auch aus der WO 95/16239, aus der WO 91/10200 und aus der US 5117 350 bekannt.

Die vorliegende Erfindung gehört in die Gruppe der Multiprozessoren. Als Programmiermodell wird gemeinsamer Speicher verwendet. Die Daten werden per Nachrichtenaustausch kommuniziert. Damit lassen sich die Vorteile beider Verfahren, nämlich einfache Programmmierung (gemeinsame Speicher) und Skalierbarkeit (Nachrichtenaustausch), vereinigen.

### 3. Zielsetzung

Das Ziel der vorliegenden Erfindung ist es, skalierbare Multicomputersorsysteme mit hoher Kommunikationsleistung (hohe Bandbreite, tiefe Latenzzeit) unter Standardbetriebssystemen (Windows NT, UNIX etc.) zu schaffen und ein Verfahren zu ihrem Betreiben anzugeben.

Aus Kostengründen ist es sinnvoll, PC's oder Workstations als einzelne Rechenelemente einzusetzen. Diese sind dank der grossen Stückzahl kostengünstig auf dem Markt verfügbar. Die eingesetzten Standardbetriebssysteme, wie z.B. Windows NT oder UNIX führen zu untolerierbar hohen Latenzzeiten, die einen Einsatz dieser Standardbetriebssysteme bisher verunmöglichten.

Die vorliegende Erfindung erlaubt nun, dass auch mit Standardbetriebssystemen tiefe Latenzzeiten erreichbar sind. Damit können zukünftig parallele Hochleistungscomputersysteme aus Standardkomponenten (Hardware und Betriebssystem) aufgebaut werden. Zusätzlich kann ein Programmiermodell eingesetzt werden, dass sehr stark dem Programmiermodell des gemeinsamen Speichers gleicht. Dadurch lassen sich Programme schneller erstellen. Schliesslich verfügt dieser neue Ansatz über sehr schnelle Synchronisations- bzw. Verwaltungsfunktionen, wie z. B. Barriersynchronisation (alle Prozessoren haben einen Treffpunkt erreicht), Event (ein einzelner Prozessor hat ein Ereignis detektiert) und Schlüsselverwaltung für exklusive Tätigkeiten. Auch Zusatztunktionen auf den globalen Daten, wie z. B. Berechnung von Summen, Minimum oder Maximum sind möglich.

### 4. Kurze Beschreibung der Figuren

- Figur 1: zeigt den Aufbau eines klassischen Mehrprozessorsystems mit verteilten Speicher und den Ablauf der Kommunikation zwischen 2 Prozessoren gemäss Stand der Technik.
- Figur 2: zeigt den Aufbau eines erfindungsgemässen Computersystems.
- Figur 3: stellt den Bezug zwischen dem globalen Adressraum und dem lokalen Adressraum dar.
- Figur 4: zeigt ein Blockdiagramm der Kommunikationssteuereinheit (Communication Manager Unit) gemäss der vorliegenden Erfindung.

### 5. Beschreibung der Erfindung

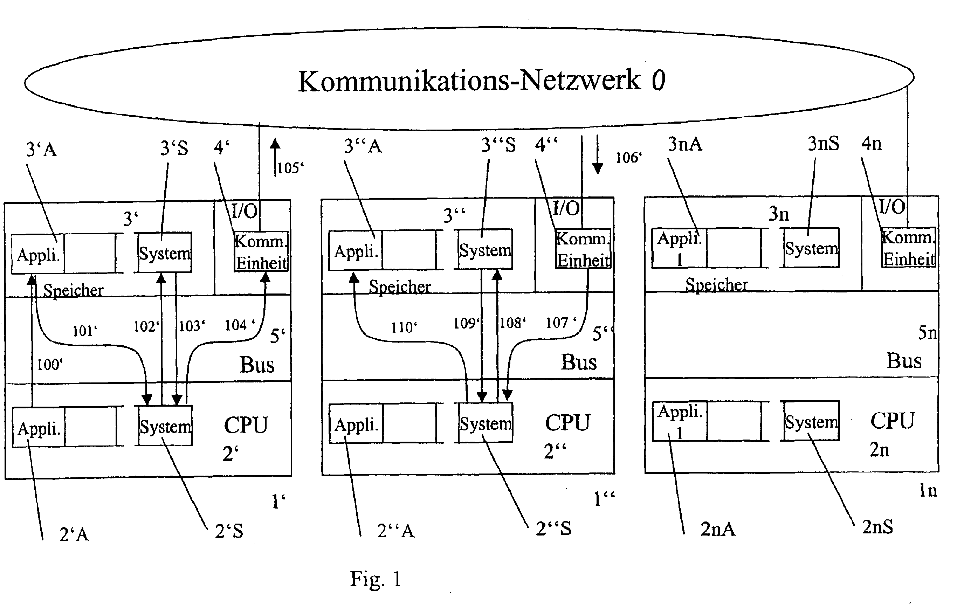

Um die Funktionsweise der vorliegenden Erfindung zu verstehen, muss man sich mit der Funktionsweise heutiger Systeme vertraut machen. Ein solches Mehrprozessorensystem gemäss Stand der Technik ist in Figur 1 dargestellt.

Ein paralleles Computersystem beinhaltet n Prozessorelemente 1', 1'', ..., 1ⁿ, wobei n = 2, 3, ... eine natürliche Zahl grösser oder gleich zwei ist. Diese mindestens zwei Prozessorelemente sind über ein gemeinsames Kommunikationsnetzwerk 0, das sinnvollerweise über eine hohe Bandbreite und tiefe Latenzzeit verfügt, miteinander verbunden. Ueber das Kommunikationsnetzwerk werden keine Voraussetzungen gemacht. Es kann z. B. "Fast Ethernet", ATM, GigaBit Ethernet, Fiber Channel oder jedes andere schnelle Netzwerk eingesetzt werden. Ebenfalls werden keine Voraussetzungen bezüglich Topologie gemacht; es können Busse, Sterne, Ringe, 2-D- oder 3-D-Netze (Torus) oder jede andere Topologie zum Einsatz kommen. Kosten und Leistungsfähigkeit solcher Netze sind unterschiedlich und müssen den Bedürfnissen angepasst werden. Ein einzelnes Prozessorelement 1', 1'', ..., 1ⁿ besteht aus einer Steuer- und Recheneinheit (CPU) 2', 2'', ..., 2ⁿ, einem Speicher 3', 3'', ..., 3ⁿ sowie einer Kommunikationseinheit 4', 4'', ..., 4ⁿ.

Die Speicher 3', 3'', ..., 3ⁿ werden normalerweise logisch in einen Applikationsbereich 3'A, 3''A, ..., 3ⁿA und einem Systembereich 3'S, 3''S, ..., 3ⁿS aufgeteilt. Es sei nun angenommen, ein erste Prozessor 1' möchte einem zweiten Prozessor 1'' eine Nachricht senden. Der Ablauf eines solchen Nachrichtenaustauschs funktioniert folgendermassen: Eine erste Steuer- und Recheneinheit (CPU) 2' hat Daten produziert, die sie kommunizieren will. Dazu legt sie die Daten in einen ersten Anwenderspeicher 3'A, angedeutet mit einem Pfeil 100'. Nun muss dem Betriebssystem signalisiert werden, dass Daten kommuniziert werden sollen. Um sicher zu gehen, dass die Daten während der Kommunikation nicht verändert werden, kopiert das Betriebssystem die Daten, angedeutet mit einem Pfeil 101', und schreibt sie in einen ersten Systemspeicher 3'S (102'). Wenn eine erste Kommunikationseinheit 4' bereit ist, werden die Daten erneut von der ersten Steuer- und Recheneinheit 2' gelesen (103') und der ersten Kommunikationseinheit 4' übergeben (104'). Dieser letzte Schritt kann beim Einsatz eines DMA-(Direct Memory Access-)Kontrollers vereinfacht werden: Die DMA holt die Daten autonom aus dem Systemspeicher und schreibt sie in die erste Kommunkationseinheit 4'. Auf der Empfangsseite gelangen die Daten zuerst in eine zweite Kommunikationseinheit 4'' (106'). Dort werden sie von einer zweiten Steuer- und Recheneinheit (CPU) 2'' abgeholt (107') und in einem zweiten Systemspeicher 3''S abgelegt (108'). Diese Zwischenspeicherung ist notwendig, weil es sein könnte, dass die Anwendung nicht bereit ist, die Daten zu empfangen. Sobald die Anwendung die Daten empfangen kann, kopiert das Betriebssystem die Daten aus dem zweiten Systemspeicher 3''S (109') in einen zweiten Anwenderspeicher 3''A (110'). Durch diese vielen Datentransporte wird das Datentransportsystem (Bus) 5' bzw. 5'' stark belastet; die Daten werden bis zu 5mal verschoben. Falls zur Fehlererkennung bei der Uebertragung noch zusätzlich Checksummen berechnet werden müssen, ist die Anzahl Datenverschiebungen noch höher. Ebenso haben solche Systeme hohe Latenzzeiten, die mehr als 1000 µs betragen können.

Die vorliegende Erfindung reduziert die Anzahl Kopien gewaltig; damit erhöht sich die interne Kommunikationsbandbreite in jedem Computersystem um mehr als den Faktor 4. Zudem kann die Latenzzeit um 2 Grössenordnungen auf unter 10 µs reduziert werden.

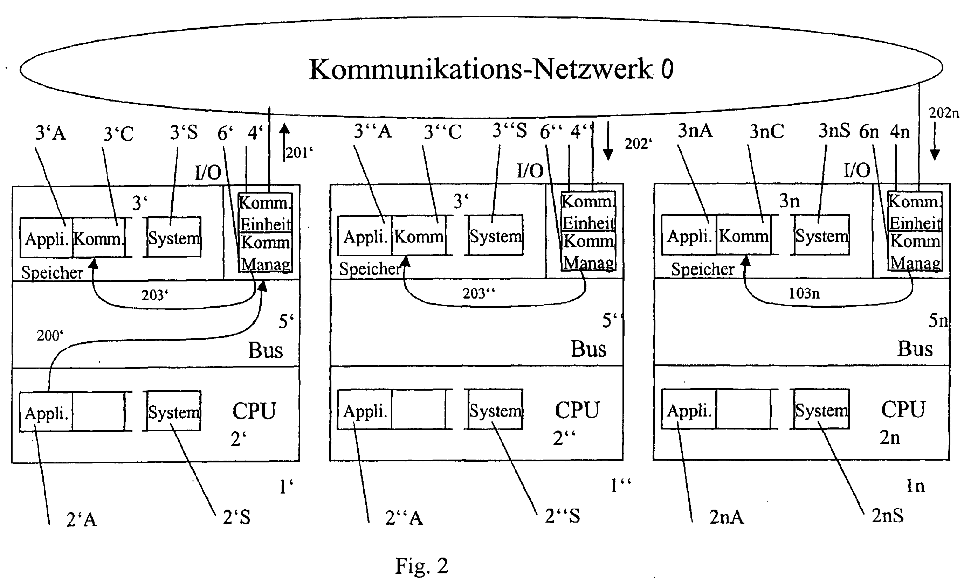

**Figur 2** zeigt den Aufbau eines erfindungsgemässen Computersystems. Auch hier handelt es sich um ein paralleles Computersystem, welches n Prozessorelemente 1', 1'', ..., 1ⁿ beinhaltet, wobei n = 1, 2, ... eine natürliche Zahl ist. Diese Prozessorelemente sind über ein gemeinsames Kommunikationsnetzwerk 0, das sinnvollerweise über eine hohe Bandbreite und tiefe Latenzzeit verfügt, miteinander verbunden. Erfindungsgemäss wird zusätzlich zu einem Standard-Computersystem zwischen Kommunikationseinheit 4', 4'', ..., 4ⁿ und lokalem Datentransportsystem 5', 5'', ..., 5ⁿ neu eine Kommunikationssteuereinheit (Communication Manager Unit) 6', 6'', ..., 6ⁿ dazwischengeschaltet. Der lokale Datenspeicher 3', 3'', ..., 3ⁿ erhält eine neue Aufteilung: Zusätzlich zum Systemdatenspeicher 3'S und Anwendungsdatenspeicher 3'A wird ein Kommunikationszwichenspeicher 3'C eingeführt. Auf diesen Block haben sowohl die Anwendung wie auch die Kommunikationssteuereinheit 6', 6'', ..., 6ⁿ Zugriff. In Systemen mit mehreren laufenden Anwendungen können auch mehrere Anwendungsdatenspeicher 3'A und Kommunikationszwischenspeicher 3'C vorhanden sein. Durch Verwendung einer virtuellen Speicheradresse können Anwenderspeicher 3'A, Kommunikationsspeicher 3'C sowie Systemspeicher 3'S virtuell als ein Block gestaltet, physisch jedoch auf mehrere Seiten verteilt sein, wie es bei der virtuellen Adressierung üblich ist.

Im erfindungsgemässen Verfahren schreibt der Prozessor die Resultate seiner Berechnung direkt in die Kommunikationssteuereinheit 6' bzw. 6'', ..., 6ⁿ (200'). Diese fügt eine globale Adresse hinzu. Datenwerte und Adresse werden der Kommunikationseinheit 4' übergeben (201') und gelangen durch das traditionelle Kommunikationsnetzwerk 0 (201') zu den Kommunikationseinheiten 4', 4'', ..., 4ⁿ (202'', ..., 202ⁿ). Die Kommunikationssteuereinheit 6', 6'', ..., 6ⁿ vergleicht die globale Adresse der ankommenden Daten mit vordefinierten Werten, die durch die Anwendung vorgegeben wurden. Daraus lässt sich bestimmen, ob der Prozessor überhaupt an diesen Daten interessiert ist. Nicht relevante Daten werden durch die Kommunikationssteuereinheit 6', 6'', ..., 6ⁿ einfach vergessen. Für relevante Daten wird eine lokale Speicheradresse im Kommunikationsspeicher 3'C, 3''C, ..., 3ⁿC berechnet, und sie werden direkt dort abgelegt (203', 203'', ..., 203ⁿ).

Mit dem erfindungsgemässen Verfahren wird für gemeinsame Daten immer lokal gelesen und global geschrieben. In realen Anwendungen wird 10- bis 10'000mal mehr gelesen als geschrieben; deshalb kann ein derart frappanter Geschwindigkeitsgewinn erzielt werden. Im erfindungsgemässen Verfahren werden die Daten nicht zusätzlich kopiert; man spricht deshalb auch von "Zero-Copying". Da für den Datenaustausch also nur ein abgesetztes Schreiben eingesetzt wird, wurde der Ausdruck "Remote Store" gewählt.

Jede Kommunikationssteuereinheit 6' beinhaltet einen Adressvergleicher (Address Comparator), der bestimmt, ob das jeweilige Prozessorelement an den Daten interessiert ist, und einen Adressrechner (Address Computation Unit), der aus der globalen Adresse die physikalische Adresse im Kommunikationsspeicher 3'C, 3''C, ..., 3ⁿC berechnet.

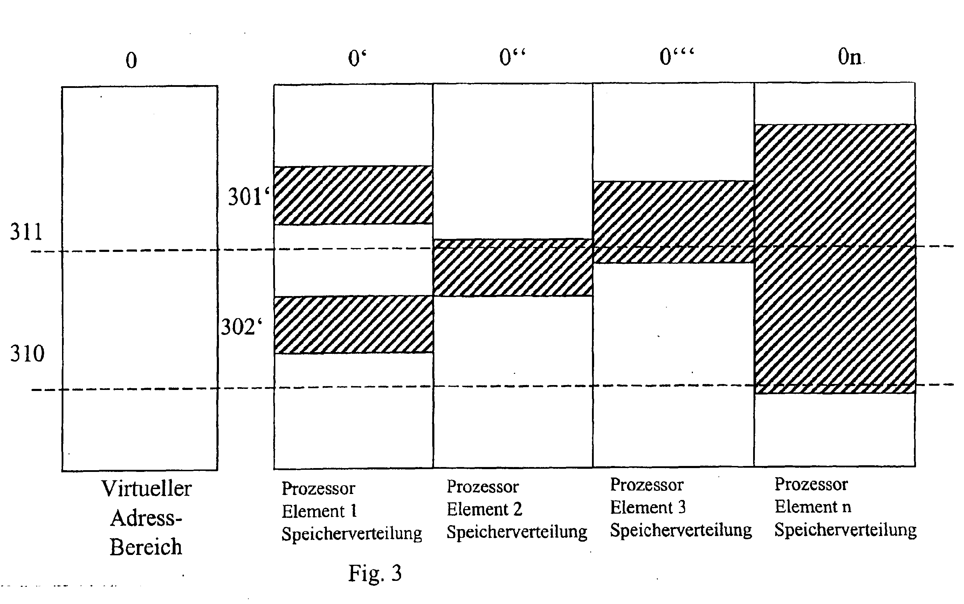

Eine detailliertere Sicht des "Remote Store"-Konzepts ist aus **Figur 3** ersichtlich. Für das gesamte parallele Computersystem wird neu ein globaler virtueller Adressraum 0 definiert. Jedes Prozessorelement kann in diesen Adressraum ein oder mehrere Fenster hineinlegen; z. B. legt in Fig. 3 Prozessor 1' (vgl. Fig. 2) die Bereiche 301' und 302' fest. Wird nun auf eine globale Adresse im Adressraum geschrieben (z. B. 310), die in einem Fenster liegt, so holen die Kommunikationssteuereinheit die Daten, wandeln die globalen Adressen auf eine lokale physikalische Adresse um und speichern die Daten dort ab.

Wie Figur 3 weiter zeigt, kann es vorkommen, dass nicht alle Prozessorelemente an den Daten interessiert sind, weil ihre Adressfenster nicht auf die spezifischen Adressen gelegt sind (311).

Ein Adressvergleicher kann ein oder mehrere Fenster verwalten, die je über eine Anfangs- und Endadresse verfügen, und alle Daten, deren Adresse innerhalb des Adressfensters liegen, werden lokal weiterverarbeitet (Fig. 3). Eine andere Lösung könnte darin bestehen, dass der globale Adressraum in Seiten (Pages) eingeteilt wird und dass eine Tabelle im Adressvergleicher kennzeichnet, welche Daten lokal weiterverarbeitet werden sollen.

Die Adressrechnung zur Bestimmung der lokalen Adresse im Kommunikationsspeicher 3'C, 3''C, ..., 3ⁿC (Fig. 2) kann durch hinzuzählen eines Offsets zur globalen Adresse erfolgen. In einem einfacheren Verfahren werden ein oder mehrere Bits (meistens die führenden) der globalen Adresse durch einen Basiswert ersetzt. Es ist aber auch eine Tabelle denkbar, die für einzelne Seiten (Pages) die physikalische Adresse angibt. Dieses Verfahren hat vor allem Vorteile bei virtueller Adressierung.

Neben den Hauptfunktionen Adressvergleich/Adressrechnung der Einheit 6', 6'', ..., 6ⁿ (Fig. 2) kann die Kommunikationssteuereinheit noch um weitere, für die Parallelverarbeitung nützliche Funktionen erweitert werden, wie z. B.:
- Synchronisationsbarrieren: Ein oder mehrere Prozessoren haben einen Treffpunkt erreicht. Es wird ein Signal gegeben (Programmunterbrechung) oder ein Statusregister in Kommunikationssteuereinheit 6', 6'', ..., 6ⁿ (Fig. 2) gesetzt.
- Ereignis (Event): Ein Prozessor hat ein Ereignis erreicht (z. B. gesuchte Daten in einer Datenbank gefunden). Es wird ein Signal erzeugt (Programmunterbrechung) oder ein Statusregister in der Kommunikationssteuereinheit 6', 6'', ..., 6ⁿ (Fig. 2) gesetzt.
- Durch die Kommunikationssteuereinheiten 6', 6'', ..., 6ⁿ (Fig. 2) werden ein oder mehrere Schlüssel verwaltet. Ein einzelner Prozessor 1', 1'', .... 1ⁿ kann von seiner Kommunikationssteuereinheit 6', 6'', ..., 6ⁿ den Schlüssel verlangen. Durch Absprache zwischen den Kommunikationssteuereinheiten 6', 6'', ..., 6ⁿ wird garantiert, dass der Schlüssel nur exklusiv einem Prozessor 1', 1'', ..., 1ⁿ zur Verfügung gestellt wird. Diese Funktionalität wird z. B. für Aenderungen in Datenbankanwendungen benötigt.
- Die Kommunikationssteuereinheiten 6', 6'', ..., 6ⁿ (Fig. 2) können auch einen oder mehrere Nachrichtenbuffer verwalten. Die Rechen/Steuereinheiten 2', 2'', ..., 2ⁿ werden erst informiert, wenn die Nachricht im Speicher 3', 3'', ..., 3ⁿ abgelegt wurde.
- Die Kommunikationssteuereinheiten 6', 6'', ..., 6ⁿ (Fig. 2) berechnen höhere Funktionen auf den kommunizierten Daten, wie beispielsweise das Maximum, Minimum oder die Summe. Damit wird die Rechner/Steuereinheit von dieser Arbeit entlastet, und die Antwortzeit ist geringer.
- Komplexe Datenstrukturen, wie z.B. 2- oder n-dimensionale Arrays, die aus vielen Einzelwerten bestehen, werden durch die Kommunikationssteuereinheit autonom eingesammelt, zusammengefügt, und interessierende Teile werden in den lokalen Speicher 3', 3'', ..., 3ⁿ (Fig. 2) kopiert.
- Es lassen sich weitere, vom Anwender definierte Funktionen denken, die die Kommunikationssteuereinheit 6', 6'', ..., 6ⁿ (Fig. 2) ausführt. Alle diese Zusatzfunktionen haben das Ziel, die Recheneinheit/Steuereinheit zu entlasten, die Programmierung zu vereinfachen und die Gesamtleistung des Systems zu erhöhen.

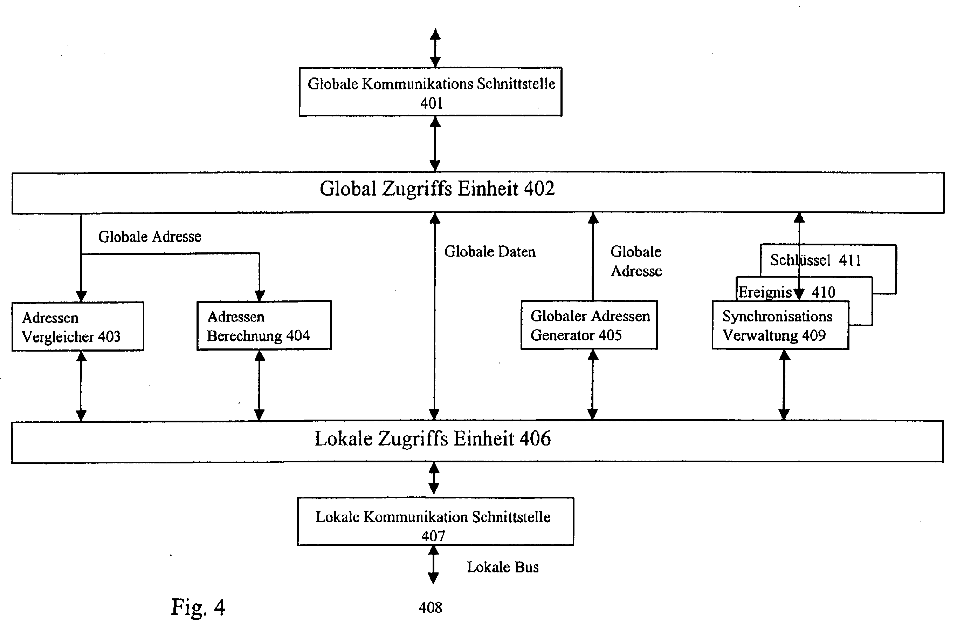

Einen möglichen Aufbau der Kommunkationssteuereinheit (Communication Manager Unit) zeigt Figur 4. Diese besteht aus:
- Global Communication Interface 401, (z. B. ATM-Interface)
- Global Access Unit 402, in der Regel ein Bussystem mit Arbiter
- Address Comparator 403, zum Vergleich der globalen Adresse, der für den lokalen Bereich interssierenden Adresse
- Address Computation Unit 404, rechnet beim Empfänger die globale Adresse auf die lokale Adresse um
- Global Address Generator 405, berechnet beim Schreiben (Senden) aus der lokalen Adresse die globale Adresse
- Local Access Unit 406, in der Regel ein Bussystem mit Arbiter
- Local Communication Interface 407 (z. B. PCI-Interface)
- Local bus 408
- Synchronization Manager 409
- Event Manager 410
- Key Manager 411.

Beim Schreiben (Senden) wird aus der lokalen Adresse mit Hilfe des Global Address Generators 405 eine globale Adresse berechnet und über die Global Access Unit 402 und das Global Communication Interface 401 an die Empfänger mitgeteilt. Beim Empfang gelangen die Nachrichten über das Global Communication Interface 401 und Global Access Unit 402 zum Address Comparator 403.

Im Address Comparator 403 wird entschieden, ob das Prozessorelement an diesen Daten interessiert ist. Bei negativer Antwort werden die Daten vergessen; bei positiver Antwort wird durch die Address Computation Unit 404 eine lokale Adresse berechnet und die globalen Daten werden direkt über das Local Communication Interface in den Kommunikationsspeicher der Applikation geschrieben.

Für die Zusatzfunktionen Synchronisation, Event und Key sind entsprechende Manager 409, 410 bzw. 411 vorgesehen. Im Fall eines Boards mit mehreren Steuer- und Recheneinheiten (CPU) kann ein Teil des Kommunikationsmanagers mehrfach vorhanden sein, um diese Steuer- und Recheneinheiten zu unterstützen.

In einer anderen Ausführungsform des erfindungsgemässen Verfahrens wirken ein oder mehrere Prozessorelemente 1', 1'', ..., 1ⁿ (Fig. 2) direkt als Ein- und/oder Ausgabeelemente, bspw. für Videokameras, Videomonitoren, Audioanwendungen, Radarsysteme etc.

Die Kommunikationssteuereinheiten 6', 6'', ..., 6ⁿ (Fig. 2) können in vielen Fällen direkt in die Kommunikationseinheit 4', 4'', ..., 4ⁿ integriert werden. In anderen Fällen mag der Einsatz eines (programmierbaren) Gate-Aarrays, einer kundenspezifischen Schaltung oder der Einsatz eines schnellen (Signal-) Prozessors sinnvoll sein. Falls das Netzwerk Punkt-zu-Punkt-, Multicast- und Broadcast-Kommunikation unterstützt, kann das gesamte erfindungsgemässe Konzept diese Funktionalität ausnützen, um die Kommunikation zu reduzieren.

## Patentansprüche

1. Verfahren zum Betreiben eines parallelen Computersystems, beinhaltend mindestens zwei Prozessorelemente (1', 1", ...1ⁿ), die über ein gemeisames Kommunikationsnetzwerk (o) miteinander verbunden sind, mit verteiltem Speicher, wobei jedes Prozessorelement über einen lokalen Programm-, Daten- sowie Kommunikationsspeicher (3', 3", ... 3ⁿ) und ein Betriebssystem verfügt, **dadurch gekennzeichnet, dass**
a) alle Prozessorelemente globale Daten global schreiben und globale Daten lokal lesen;
b) beim globalen Schreiben eine globale Adresse und/oder eine Nummer mitgegeben wird;
c) ein in jedem Prozessorelement vorhandener Adress- und/oder Nummernvergleicher anhand der Adresse entscheidet, ob das spezifische Prozessorelement an diesen Daten interessiert ist;
d) falls das spezifische Prozessorelement an den Daten interessiert ist, ein lokaler Adressrechner die physikalische Adresse im Prozessorspeicher bestimmt;
e) die Parameter des Adress- und/oder Nummernvergleichers und eines in jedem Prozessorelement vorhandenen Adressrechners vor oder während der Rechnung mit dem Betriebssystem abgesprochen werden.

2. Verfahren nach Anspruch 1, **dadurch gekennzeichnet, dass** der Austausch von Nachrichten durch die Kommunikationssteuereinheit (6', 6", ... 6ⁿ) kontrolliert wird und damit mit Zero Copying gearbeitet werden kann.

3. Verfahren nach Anspruch 1 oder 2, **dadurch gekennzeichnet, dass** der Adressvergleicher aus einem oder mehreren Adressfenstem besteht, dass jedes Fenster über eine Anfangsadresse (Base) und eine Endadresse (Top) verfügt und dass alle Daten, die innerhalb eines dieser Fenster liegen, weiter verarbeitet werden.

4. Verfahren nach Anspruch 1 oder 2, **dadurch gekennzeichnet, dass** der globale Adressraum in Seiten (Pages) eingeteilt wird und dass eine Tabelle im Adress- und/oder Nummernvergleicher kennzeichnet, welche Daten lokal weiter verarbeitet werden sollen.

5. Verfahren nach einem der Ansprüche 1-4, **dadurch gekennzeichnet, dass** zur globalen Adresse ein Offset, bestehend aus einem oder mehreren Bits, dazugezählt wird.

6. Verfahren nach einem der Ansprüche 1-4, **dadurch gekennzeichnet, dass** ein oder mehrere Bits der globalen Adresse durch einen Basiswert ersetzt werden.

7. Verfahren nach einem der Ansprüche 1-4, **dadurch gekennzeichnet, dass** aus einem oder mehreren Bits der globalen Adresse und/oder Nummer eine Tabelle gebildet wird und dass für jeden Tabelleneintrag ein entsprechender lokaler Adresswert eingetragen ist, welcher die Adresse mitbestimmt.

8. Verfahren nach einem der Ansprüche 1-7, **dadurch gekennzeichnet, dass** das globale Schreiben nicht an alle Prozessoren versandt wird, sondern nur an auswählbare Gruppen, womit die Belastung des Netzwerks stark reduziert wird.

9. Verfahren nach einem der Ansprüche 1-8, **dadurch gekennzeichnet, dass** die Barriersynchronisation (alle Prozessorelemente haben den Treffpunkt erreicht) durch die Kommunikationssteuereinheit unterstützt bzw. übernommen wird.

10. Verfahren nach einem der Ansprüche 1-9, **dadurch gekennzeichnet, dass** die Erkennung eines Ereignisses (Event) durch einen einzelnen Prozessor über die Kommunikationssteuereinheit auf das ganze System übertragen wird.

11. Verfahren nach einem der Ansprüche 1-10, **dadurch gekennzeichnet, dass** ein oder mehrere Schlüssel, die exklusiv sind, durch die Kommunikationssteuereinheit unterstützt bzw. übernommen werden.

12. Verfahren nach einem der Ansprüche 1-11, **dadurch gekennzeichnet, dass** ein oder mehrere Prozessorelemente direkt als Eingabeelement und/oder Ausgabeelement wirkt.

13. Paralleles Computersystem mit verteiltem Speicher, beinhaltend mindestens zwei Prozessorelemente (1', 1", ...1ⁿ), die über ein gemeisames Kommunikationsnetzwerk (o) miteinander verbunden sind, wobei jedes Prozessorelement über einen lokalen Programm-, Daten- sowie Kommunikationsspeicher (3', 3", ... 3") und ein Betriebssystem verfügt, wobei jedes Prozessorelement eine Kommunikationssteuereinheit (6', 6", ... 6ⁿ) zur Steuerung der Kommunikationseinheit (4', 4", ... 4ⁿ) enthält, **dadurch gekennzeichnet, dass** das Computersystem so programmiert ist, dass es befähigt ist, ein Verfahren nach einem der Ansprüche 1 bis 12 durchzuführen

14. Paralleles Computersystem nach Anspruch 13, **dadurch gekennzeichnet, dass** jede Kommunikationssteuereinheit (6', 6", ... 6") zwischen je einer Kommunikationseinheit und einem lokalen Datentransportsystem eines jeden Prozessorelementes dazwischengeschaltet ist.

15. Paralleles Computersystem nach Anspruch 13 oder 14, **dadurch gekennzeichnet, dass** jede Kommunikationssteuereinheit (6', 6", ... 6ⁿ) einen Adressvergleicher und einen Adressrechner beinhaltet.

## Claims

1. Method for operating a parallel computer system comprising at least two processor elements (1', 1", ...1ⁿ), which are connected via a mutual communication network (0), with a distributed memory, wherein each processor element comprises a local program memory, data memory and communications memory (3', 3", ...3ⁿ) and an operating system, **characterized in that**
(a) all processor elements write global data globally and read global data locally;
(b) when writing globally a global address and/or number is included;
(c) for each processor element, an address and/or a number comparator determines on the basis of the address whether the specific processor element is interested in this data;
(d) if the specific processor element is interested in the data, a local address computation determines the physical address in the processor memory;
(e) the parameters of the address and/or number comparator and of an address computation unit on hand in each processor element is aligned with the operating system before or during processing.

2. Method according to claim 1, **characterized in that** the exchange of messages is controlled by the communication managing unit (6', 6", ...6ⁿ) and thus it is possible to work with "zero copying".

3. Method according to claim 1 or 2, **characterized in that** the address comparator comprises one or several address windows, that each window comprises an initial address (base) and an end address (top) and that all data within one of these windows is processed further.

4. Method according to claim 1 or 2, **characterized in that** the global address space is divided into pages and that a table in the address and/or number comparator distinguishes which data is to be processed further locally.

5. Method according to one of claims 1 through 4, **characterized in that** an offset of one or more bits is added to the global address.

6. Method according to one of claims 1 through 4, **characterized in that** one or more bits of the global address are replaced by a base value.

7. Method according to one of claim 1 through 4, **characterized in that** a table is formed from one or more bits of the global address and/or number and that for each table entry a corresponding local address value is entered, which co-determines the address.

8. Method according to one of claims 1 through 7, **characterized in that** the global writing is not transmitted to all processors, but only to selectable groups, thereby substantially reducing load on the network.

9. Method according to claim one of claims 1 through 8, **characterized in that** the barrier synchronization (all processor elements have reached the meeting point) is supported or taken over respectively by a communication managing unit.

10. Method according to one of claims 1 through 9, **characterized in that** the identification of an event by a single is transmitted to the entire system by the communication managing unit.

11. Method according to one of claims 1 through 10, **characterized in that** one or several keys, which are exclusive, are supported or taken over respectively by the communication managing unit.

12. Method according to one of claims 1 through 11, **characterized in that** one or several processor elements act directly as input and/or output elements.

13. Parallel computer system with distributed memory, comprising at least two processor elements (1, 1', ...1ⁿ), which are connected via a mutual communication network (0), with a distributed memory, wherein each processor element comprises a local program memory, data memory and communications memory (3', 3", ...3ⁿ) and an operating system, wherein each processor element includes a communication managing unit (6', 6" ... 6ⁿ) for controling the communication unit (4', 4", ... 4ⁿ), **characterized in that** the computer system is programmed such that it is capable to carry out a method according to one of claims 1 through 12.

14. Parallel computer system according to claim 13, **characterized in that** each communication managing unit (6', 6" ... 6ⁿ) is inserted between a communication unit and a local data transport system of each processor element.

15. Parallel computer system according to claim 13 or 14, **characterized that** each communication managing unit (6', 6" ... 6ⁿ) comprises an address comparator and an address computation unit.

## Revendications

1. Méthode pour faire fonctionner un système d'ordinateur parallèle, contenant au moins deux éléments de processeur (1', 1", ... 1ⁿ) qui sont reliés entre eux par un réseau de communication commun (O), les éléments de processeur comprenant une mémoire partagée, dans lequel chaque élément de processeur dispose d'une mémoire locale de programme, de données ainsi que de communication (3', 3", ... 3ⁿ) et d'un système d'exploitation, **caractérisée en ce que :**
(a) tous les éléments de processeur écrivent globalement des données globales et lisent localement des données globales ;
(b) une adresse globale et/ou un numéro est/sont remis(e) en même temps pendant l'écriture globale ;
(c) un comparateur d'adresses et/ou de numéros présent dans chaque élément de processeur décide à l'aide de l'adresse si l'élément de processeur spécifique est intéressé par ces données ;
(d) si l'élément de processeur spécifique est intéressé par ces données, un ordinateur d'adresses local détermine l'adresse physique dans la mémoire du processeur ;
(e) les paramètres du comparateur d'adresses et/ou de numéros et d'un ordinateur d'adresses présent dans chaque élément de processeur sont convenus avec le système d'exploitation avant ou pendant le calcul.

2. Méthode selon la revendication 1, **caractérisée en ce que** l'échange des communiqués est contrôlé par l'unité de commande de communication (6', 6", ... 6ⁿ) et qu'il est ainsi possible de travailler avec la copie de données en temps zéro (« Zero Copying »).

3. Méthode selon l'une ou l'autre des revendications 1 et 2, **caractérisée en ce que** le comparateur d'adresses est constitué d'une ou de plusieurs fenêtres d'adresses, **en ce que** chaque fenêtre dispose d'une adresse de début (« Base ») et d'une adresse finale (« Top ») et **en ce que** toutes les données qui se trouvent à l'intérieur d'une de ces fenêtres, continuent d'être traitées.

4. Méthode selon l'une ou l'autre des revendications 1 et 2, **caractérisée en ce que** l'espace d'adresses global est divisé en pages et **en ce qu'**un tableau au moyen duquel les données doivent continuer à être traitées localement est mis en évidence dans le comparateur d'adresses et/ou de numéros.

5. Méthode selon l'une des revendications 1 à 4, **caractérisée en ce qu'**un offset constitué d'un ou de plusieurs bit(s) est ajouté à cela pour l'adresse globale.

6. Méthode selon l'une des revendications 1 à 4, **caractérisée en ce qu'**un ou plusieurs bit(s) de l'adresse globale est (sont) remplacé(s) par une valeur de base.

7. Méthode selon l'une des revendications 1 à 4, **caractérisée en ce qu'**un tableau est formé à partir d'un ou de plusieurs bit(s) de l'adresse globale et/ou du numéro et **en ce qu'**une valeur d'adresse locale correspondante qui détermine en même temps l'adresse est enregistrée pour chaque enregistrement de tableau.

8. Méthode selon l'une des revendications 1 à 7, **caractérisée en ce que** l'écriture globale n'est pas envoyée à tous les processeurs, mais seulement à des groupes pouvant être sélectionnés, à la suite de quoi la sollicitation du réseau est fortement réduite.

9. Méthode selon l'une des revendications 1 à 8, **caractérisée en ce que** la synchronisation par barrière (tous les éléments de processeur ont atteint le point de rencontre) est soutenue ou reprise par l'unité de commande de communication.

10. Méthode selon l'une des revendications 1 à 9, **caractérisée en ce que** la reconnaissance d'un événement (« Event ») par un processeur individuel est transmise sur tout le système par l'unité de commande de communication.

11. Méthode selon l'une des revendications 1 à 10, **caractérisée en ce qu'**un ou plusieurs code(s) qui est (sont) exclusif(s) est (sont) soutenu(s) ou repris par l'unité de commande de communication.

12. Méthode selon l'une des revendications 1 à 11, **caractérisée en ce qu'**un ou plusieurs élément(s) de processeur agit (agissent) directement comme élément(s) de saisie et/ou comme élément(s) de sortie.

13. Système d'ordinateur parallèle contenant au moins deux éléments de processeur (1', 1", ... 1ⁿ) qui sont reliés entre eux par un réseau de communication commun (O), dans lequel chaque élément de processeur dispose d'une mémoire locale de programme, de données ainsi que de communication (3', 3", ... 3ⁿ) et d'un système d'exploitation, dans lequel chaque élément de processeur contient une unité de commande de communication (6', 6", ... 6ⁿ) afin de commander l'unité de communication (4', 4", ... 4ⁿ), **caractérisé en ce que** le système d'ordinateur est programmé de manière à être capable d'exécuter une méthode selon l'une des revendications 1 à 12.

14. Système d'ordinateur parallèle selon la revendication 13, **caractérisé en ce que** chaque unité de commande de communication (6', 6", ... 6ⁿ) est mise en circuit en intermédiaire à chaque fois entre une unité de communication et un système local de transport des données de chaque élément de processeur.

15. Système d'ordinateur parallèle selon l'une ou l'autre des revendications 13 et 14, **caractérisé en ce que** chaque unité de commande de communication (6', 6", ... 6ⁿ) contient un comparateur d'adresses et un ordinateur d'adresses.
